# EUROPÄISCHE PATENTANMELDUNG

(11) **EP 4 446 090 A2**
(43) Veröffentlichungstag der Anmeldung: **16.10.2024**
(21) Anmeldenummer: 24195626.7
(22) Anmeldetag: 02.01.2017
(51) Int. Cl.: B29C 49/06

(54) **ANLAGE UND VERFAHREN ZUM BEHANDELN VON KUNSTSTOFFVORFORMLINGEN MIT LUFTFÖRDERER ODER TRANSPORTSHUTTLE**

(30) Priorität: 02.03.2016 DE 102016103756
(62) Teilanmeldung aus: 17700033.8
(71) Anmelder: Krones AG, 93073 Neutraubling (DE)
(72) Erfinder: HIRDINA, Jochen, 93073 Neutraubling (DE); DÜNZINGER, Bernhard, 93073 Neutraubling (DE)
(74) Vertreter: Bittner, Bernhard

(57) **Zusammenfassung**

Anlage (1) zum Behandeln von Kunststoffvorformlingen (5), umfassend eine Spritzgussmaschine (10) zum Herstellen der Kunststoffvorformlinge, eine sterile Blasformmaschine (20), zum Umformen der Kunststoffvorformlinge (5) in Kunststoffbehältnisse und ein Transportsystem (30) zum wenigstens abschnittweisen oder teilweisen Transportieren der hergestellten Kunststoffvorformlinge (5) von der Spritzgussmaschine (10) zu der Blasformmaschine (20), wobei die Kunststoffvorformlinge während des Transports, insbesondere an einem Mündungsbereich der Kunststoffvorformlinge (5), führbar. Erfindungsgemäß umfasst das Transportsystem (30) einen sterilen Luftförderer (30) oder eine Vielzahl von Transportshuttles (30), insbesondere Magnetshuttles und die Kunststoffvorformlinge werden von dem sterilen Luftförderer oder den Magnetshuttles von der Spritzgussmaschine (10) zu der Blasformmaschine (20) transportiert.

## Beschreibung

Die vorliegende Erfindung bezieht sich auf eine Anlage und ein Verfahren zum Behandeln von Kunststoffvorformlingen. Es ist bekannt, Kunststoffvorformlinge mittels einer Spritzgussmaschine herzustellen und die Kunststoffvorformlinge anschließend in einer Blasformmaschine, mittels eines Streckblasprozesses und/oder eines Blasprozesses zu Kunststoffbehältnissen umzuformen.

Im Stand der Technik ist es dabei üblich, die Vorformlingherstellung (Spritzgussprozess) und die Behälterherstellung (Streckblasprozess, Blasprozess) nicht miteinander zu verketten, so dass diese Prozesse in der Regel örtlich und zeitlich getrennt voneinander stattfinden. Nach der Herstellung der Vorformlinge, werden diese üblicherweise als Schüttgut gelagert und über eine Sortiereinrichtung bei bzw. vor der Behälterherstellung wieder vereinzelt und der Blasformmaschine zugeführt. Demzufolge ist es notwendig die Kunststoffvorformlinge nach deren Herstellung zuerst Zwischenzulagern und anschließend von der Lagerung zu der Blasformmaschine zu transportieren, so dass die Kunststoffvorformlinge zu Kunststoffbehältnissen umgeformt werden können.

Durch diesen Transport und die Lagerung der Kunststoffvorformlinge als Schüttgut besteht allerdings die Gefahr, dass Beschädigungen an den Kunststoffvorformlingen entstehen und zudem fallen zusätzliche Lager- und Logistikkosten an. Auch ist durch die fehlende Verkettung der Spritzgussmaschine mit der Blasformmaschine und die dadurch entstehende notwendige Lagerung als Schüttgut die Verweildauer der einzelnen Kunststoffvorformlinge unterschiedlich lang, insbesondere da bei einer Schüttgutlagerung nicht nach dem FiFo-Prinzip (first in - first out) vorgegangen wird, was wiederum negative Effekte auf den Streckblasprozess hat. Insbesondere weisen die Kunststoffvorformlinge dadurch unterschiedliche Ausgangsbedingungen für den Streckblasprozess/Blasformprozess auf, da beispielsweise die durch den Spritzgussprozess gegebene Sterilität der Kunststoffvorformlinge wieder verloren geht und die ebenfalls durch den Spritzgussprozess vorhandene Wärme innerhalb des Kunststoffvorformlings durch die Lagerung wieder verloren geht und somit vor der Umformung erneut zugeführt werden muss. Eine örtliche und zeitliche Trennung der Spritzgussmaschine und der Blasformmaschine führt daher zu einem erhöhten Aufwand, um aus Vorformlingen Behälter zu formen, da zusätzliche Transportwege, eine zusätzliche Lagerung und eine erneute Sterilisation und Erwärmung der Vorformlinge vor dem Blasbeginn notwendig sind.

Weiterhin weisen die aus dem Stand der Technik bekannten und üblichen Sortiereinrichtungen, welche die als Schüttgut vorhandenen Kunststoffvorformlinge, vor dem Eintritt in die Blasformmaschine sortieren bzw. ausrichten, eine hohe Störanfälligkeit auf.

Der vorliegenden Erfindung liegt daher die Aufgabe zugrunde, eine Anlage und ein Verfahren zur Verfügung zu stellen, welche die oben genannten Nachteile vermeiden und welche die Kunststoffvorformlinge direkt nach deren Herstellung von einer Spritzgussmaschine zu einer Blasformmaschine transportiert, ohne, dass dabei eine Zwischenlagerung der hergestellten Kunststoffvorformlinge notwendig ist. Bevorzugt soll dabei eine sterile Blasformmaschine zum Einsatz kommen.

Diese Aufgaben werden erfindungsgemäß durch die Gegenstände der unabhängigen Ansprüche erreicht. Vorteilhafte Ausführungsformen und Weiterbildungen sind Gegenstand der Unteransprüche.

Eine erfindungsgemäße Anlage zum Behandeln von Kunststoffvorformlingen weist eine Spritzgussmaschine zum Herstellen der Kunststoffvorformlinge, eine sterile Blasformmaschine zum Umformen der Kunststoffvorformlinge in Kunststoffbehältnisse und ein Transportsystem zum wenigstens abschnittsweisen oder teilweisen Transportieren der hergestellten Kunststoffvorformlinge von der Spritzgussmaschine zu der Blasformmaschine auf. Die Kunststoffvorformlinge sind dabei während des Transports, insbesondere an einem Mündungsbereich der Kunststoffvorformlinge führbar.

Erfindungsgemäß umfasst das Transportsystem einen sterilen Luftförderer oder eine Vielzahl von Transportshuttles, insbesondere Magnetshuttles und die Kunststoffvorformlinge werden von dem sterilen Luftförderer oder den Magnetshuttles von der Spritzgussmaschine zu der Blasformmaschine transportiert.

Vorteilhaft weist das Transportsystem einen Reinraum auf, innerhalb dessen die Kunststoffvorformlinge von der Spritzgussmaschine zu der Blasformmaschine transportierbar sind. Dieser Reinraum ist vorteilhaft kanalartig ausgebildet und umgibt das Transportsystem zumindest teilweise und bevorzugt vollständig. Der Reinraum wird gegenüber der Umgebung bevorzugt durch mehrere Wandungen abgegrenzt. Bevorzugt erfolgt der Transport der Kunststoffvorformlinge von der Spritzgussmaschine zu der Blasformmaschine zumindest teilweise innerhalb des Reinraums.

Durch die Verwendung eines Luftförderers oder eines Transportshuttles für den Transport der Kunststoffvorformlinge wird die Anzahl der benötigten Greifeinrichtungen für den Transport minimiert, welche ansonsten zusätzlich sterilisiert werden müssten. Auch weisen ein Luftförderer oder ein Transportshuttle, im Vergleich zu konventionellen Greifklammern, weniger Abnutzungs- und Verschleißerscheinungen auf, so dass auch der Wartungsaufwand reduziert werden kann.

Bevorzugt ist das Transportsystem derart ausgestaltet, dass es den Abstand bzw. die Teilung zwischen den einzelnen Kunststoffvorformlingen ändern kann und/oder beliebig anpassen kann. Dabei ist es im Falle des Luftförderers denkbar, dass die Kunststoffvorformlinge direkt hintereinander gefördert werden. Bei der Verwendung von Magnetshuttles ist es denkbar, dass diese unabhängig voneinander gesteuert werden. Auf diese Weise kann die Transportstrecke verkürzt werden und damit auch der Reinraum zwischen der Spritzgussmaschine und der Blasformmaschine.

Vorteilhaft ist es auch denkbar, dass der gesamte Bereich zwischen der Spritzgussmaschine und der Blasformmaschine, oder zumindest der Bereich in welchen der Transport der Kunststoffvorformlinge durchgeführt wird, aseptische Bedingungen aufweist, so dass eine Kontamination der Kunststoffvorformlinge mit Keimen und Bakterien verhindert werden kann. Bevorzugt werden die Kunststoffvorformlinge auch bereits unter aseptischen Bedingungen in der Spritzgussmaschine hergestellt oder werden zumindest nach der Herstellung noch innerhalb der Spritzgussmaschine sterilisiert. Weiterhin wäre es aber auch möglich, dass die Kunststoffvorformlinge erst vor dem Eintritt in den Luftförderer bzw. vor der Übergabe auf die Transportshuttles sterilisiert werden. Zu diesem Zwecke kann vorteilhaft eine Sterilisationseinrichtung zwischen der Spritzgussmaschine und dem Transportsystem angeordnet sein.

Im Stand der Technik ist es dabei üblich, die Herstellung der Kunststoffvorformlinge offline durchzuführen, d.h., wie oben bereits erwähnt, nicht mit der Herstellung der Kunststoffbehältnisse zu verketten. Die Vorformlinge werden demzufolge in der Regel offline gespritzt, was allerdings die Nachteile mit sich bringt, dass die Vorformlinge nach der Herstellung wieder aufgefädelt werden müssen. Zudem besteht die Gefahr, dass sie während des Transports beschädigt werden, so dass sie auch eine erneut Inspizierung auf etwaige Fehler durchgeführt werden muss.

Es wird daher auch vorgeschlagen, bereits während der Herstellung der Kunststoffvorformlinge, die oben genannten Nachteile und Probleme zu beseitigen. Es wird vorgeschlagen zur Herstellung der Kunststoffvorformlinge, die Vorformlinge in Formen zu spritzen, welche ähnlich den Streckblasformen sind. Vorteilhaft bestehen diese Spritzgussformen, welche bevorzugt an einem Spritzgusskarussell der Spritzgussmaschine mitlaufen, wenigstens aus einem Bodenbereich mit Anspritzung, jeweils zwei Klammern für die Seitenwand und für das Gewinde bzw. die Mündung, um die Form zu Öffnen und zu Schließen und einem Kern mit Hubeinheit, Kurve oder Linearmotor.

Bei einem Extruder, welcher das flüssige Kunststoffgranulat zur Spritzgussform transportiert, kann es sich vorteilhaft um einen großen statischen Extruder handeln, welcher alle Spritzgussformen versorgt oder um einen mitlaufenden Einzelextruder, welcher eine einzelne Spritzgussform oder eine Formgruppen, bestehend aus mehreren Spritzgussformen, versorgt.

Vorteilhaft kann ein möglicher Ablauf des Spritzgussprozesses nach mindestens einem oder mehreren der folgenden Schritte erfolgen: Reinigen der Spritzgussformen; Aufbringen eines Formtrenn- und/oder Gleitmittels auf die Innenwände der Spritzgussformen; Schließen der jeweils zwei Klammern an den Seitenwänden und an der Mündung der Spritzgussform; Zuführen des Kerns und Zuführen der Anspritzdüse zu der Anspritzung im Bodenbereich der Spritzgussform; Temperieren der Spritzgussform, auf die für den Spritzgussprozess benötigte Temperatur; Anschießen; Spritzen des flüssigen Kunststoffgranulats in die Form; Temperieren; Kern ausziehen; Öffnen der zwei Klammern an den Seitenwänden; Anspritzdüse von der Form absenken/wegführen; Übergeben des Kunststoffvorformlings an Greifeinrichtungen der dem Spritzgussprozess nachfolgenden Schritte; Öffnen der zwei Klammern an der Mündung.

Durch diese Vorgehensweise, insbesondere durch die direkte Übergabe der Kunststoffvorformlinge nach der Herstellung an die Greifeinrichtung, entfällt das im Stand der Technik notwendige auffädeln der Vorformlinge nach deren Herstellung, so dass dadurch insbesondere auch die Beschädigungen durch den Transport verringert werden.

Dabei werden die Kunststoffvorformlinge nach ihrer Fertigung vorteilhaft in einer sterilen Form angeordnet, so dass der Aufwand für die nachfolgende Sterilisation reduziert werden kann.

In einer weiteren vorteilhaften Ausführungsform ist zwischen der Spitzgussmaschine und der Blasformmaschine ein Bereich vorgesehen, in dem die Kunststoffvorformlinge temperiert werden und insbesondere auf einer für den Blasformprozess notwendigen Temperatur gehalten werden. Dadurch ist kein zusätzliches bzw. erneutes Aufwärmen der Vorformlinge vor dem Blasformprozess mehr notwendig, da diese bereits während des gesamten Transports temperiert werden. Bevorzugt wird dabei in dem temperierten Bereich der oben beschriebene Sterilraum bzw. Reinraum ausgebildet. Vorteilhaft wird der Sterilraum auch durch die Temperierung selbst aufrechterhalten.

Bei einer anderen vorteilhaften Ausführungsform kann jedoch zusätzlich auch noch ein Ofen bzw. ein kleines Heizmodul vorgesehen sein, welcher vorteilhaft stromabwärts der Blasformmaschine angeordnet ist. Mit diesem Ofen werden die Kunststoffvorformlinge gegebenenfalls nochmals erwärmt und auf Blastemperatur gebracht, bevor sie in die Blasformmaschine gelangen. Da die Kunststoffvorformlinge durch die Spritzgussmaschine und auch durch den temperierten Bereich bereits eine erhöhte Temperatur aufweisen, kann dieser Ofen bzw. das Heizmodul deutlich kleiner ausgebildet werden, als ein aus dem Stand der Technik bekannter Ofen, da die Kunststoffvorformlinge nicht mehr so lange erwärmt werden müssen. Bevorzugt ist das Heizmodul als steriles Heizmodul ausgeführt.

Bevorzugt ist an einer Entnahmestation der Spritzgussmaschine eine Vielzahl von Kunststoffvorformlingen in einem Spritzgusswerkzeug angeordnet. Bevorzugt kann diese Vielzahl von Kunststoffvorformlingen mittels einer Handhabungseinrichtung vereinzelt an einen Einzelstrang einer Transportstrecke des Luftförderers/oder der Shuttles übergeben werden, so dass die Kunststoffvorformlinge einzeln an die Blasformmaschine transportierbar sind. Die Handhabungseinrichtung umfasst dabei bevorzugt wenigstens einen schaltbaren Greifer und/oder wenigstens eine schaltbare Weiche. Insbesondere greift der schaltbare Greifer die Kunststoffvorformlinge während des Transports an dem Mündungsbereich der Kunststoffvorformlinge, insbesondere unterhalb eines Tragrings der Kunststoffvorformlinge. Der Greifer kann bevorzugt pneumatisch, elektrisch, magnetisch oder hydraulisch angetrieben werden.

Vorteilhaft erfolgt das Greifen der Kunststoffvorformlinge aus der Spritzgussmaschine bzw. aus dem Spritzkarussell ähnlich wie ein aus dem Stand der Technik bekanntes Greifen der Kunststoffbehältnisse aus der Blasformmaschine bzw. aus der Streckblasmaschine.

Vorteilhaft ist es auch denkbar, dass der Transport der Kunststoffvorformlinge von der Spritzgussmaschine zu der Transportstrecke des Luftförderers mit Transportdornen erfolgt, welche bevorzugt während des Transports der Kunststoffvorformlinge in deren Mündungen eingreifen und die Vorformlinge so halten.

Es wird demzufolge eine Verbindung der Spritzgussmaschine mit der Blasformmaschine derart realisiert, so dass die in der Spritzgussmaschine hergestellten Kunststoffvorformlinge direkt nach der Herstellung, ohne Zwischenlagerung, insbesondere ohne eine Schüttgutlagerung, in die Blasformmaschine gelangen, in welcher sie zu Kunststoffbehältnissen umgeformt werden.

Insbesondere ist eine Vielzahl von fertigen Kunststoffvorformlingen nach der Herstellung matrixförmig innerhalb des Spritzgusswerkzeugs an der Entnahmestation des Spritzgusswerkzeugs angeordnet und wird über den schaltbaren Greifer und/oder die schaltbare Weiche aus dieser matrixförmigen Anordnung entnommen. Die Verbindung der Spritzgussmaschine und der Blasformmaschine miteinander erfolgt demnach vorteilhaft durch das (sterile) Transportsystem und/oder den schaltbaren Greifer und/oder die schaltbare Weiche. Der Greifer ist insbesondere derart gestaltet, dass er auf unterschiedliche Vorformlingsdurchmesser angepasst werden kann, ohne, dass er ausgetauscht werden muss.

Insbesondere erfolgt die Entnahme der Kunststoffvorformlinge aus der Entnahmestation nach dem FiFo Prinzip, so dass zuerst diejenigen Kunststoffvorformlinge aus der Entnahmestation entnommen werden, welche auch zuerst von der Spritzgussmaschine hergestellt wurden. Demnach unterliegen die Kunststoffvorformlinge für den Blasvorgang alle den gleichen Ausgangsbedingungen, da die Zeitdauer zwischen der Herstellung und der Übergabe an die Blasformmaschine für alle Kunststoffvorformlinge gleich ist.

In einer vorteilhaften Ausführungsform wird daher vorgeschlagen, dass die Übergabe der Kunststoffvorformlinge aus dem Spritzgusswerkzeug in die Transportstrecke bzw. in das Transportsystem und somit die Eingabe in die Blasformmaschine nach dem FiFo Prinzip erfolgt.

In einer vorteilhaften Ausführungsform der Anlage ist zwischen der Spritzgussmaschine und der Blasformmaschine eine Aussonderungseinheit, zum Aussondern von fehlerhaften Kunststoffvorformlingen und/oder eine Puffereinheit, zum Zwischenlagern der Kunststoffvorformlinge und/oder eine Kontrolleinheit zum Inspizieren der Kunststoffvorformlinge angeordnet.

Vorteilhaft umfasst die Aussonderungseinheit einen Vorformling-Shredderer, welcher die fehlerhaften, ausgesonderten Kunststoffvorformlinge gleich vernichtet. Insbesondere können die vernichteten Vorformlinge anschließend einer Kunststoff-Recycling-Anlage zugeführt werden, so dass das Kunststoffmaterial der vernichteten Vorformlinge, zur Herstellung neuer Kunststoffvorformlinge in der Spritzgussmaschine, wiederverwendet werden kann. Vorteilhaft erfolgt dabei die Aussonderung der Kunststoffvorformlinge vereinzelt. Bevorzugt kann auch ein Auswurfrad vorgesehen sein, welches vor der Aussonderungseinheit angeordnet ist und welches die fehlerhaften Kunststoffvorformlinge aufnimmt und von dem aus die Vorformlinge an die Aussonderungseinheit überführt werden, beispielsweise mit wenigstens einem weiteren Greifer oder aber auch mit wenigstens einem weiteren Shuttle.

Dabei ist bevorzugt die Kontrolleinheit der Aussonderungseinheit vorgeschaltet und bevorzugt zwischen der Spritzgussmaschine und der Aussonderungseinheit angeordnet und kontrolliert vorteilhaft die fertigen in der Spritzgussmaschine hergestellten Vorformlinge. Insbesondere erfolgt in der Kontrolleinheit eine Inspektion der Mündung, des Bodens und/oder der Kontur des Vorformlings sowie bevorzugt eine Inspektion der Seitenwände, der Farbe und/oder auch der Wandungsdicke. Die Inspektion der Kunststoffvorformlinge kann vorteilhaft optisch, mittels einer optischen Inspektionseinrichtung erfolgen. Die optische Inspektionseinrichtung kann beispielsweise ein optischer Sensor, eine Bildaufnahmeeinrichtung oder dergleichen sein.

Das Zwischenlagern der Kunststoffvorformlinge in der Puffereinheit dient dabei insbesondere dazu, um Störungen in der Spritzgussmaschine und/oder der Blasformmaschine zu überbrücken. Tritt beispielsweise eine Störung in der Blasformmaschine auf, kann die Produktion der Kunststoffvorformlinge in der Spritzgussmaschine fortgeführt werden und die hergestellten Kunststoffvorformlinge können bis zur Beseitigung der Störung der Blasformmaschine in der Puffereinheit gelagert werden. Vorteilhaft ist es auch möglich, dass immer eine bestimmte Anzahl an Kunststoffvorformlingen in der Puffereinheit gelagert wird, so dass bei einer Störung der Spritzgussmaschine die Umformung der Kunststoffvorformlinge innerhalb der Blasformmaschine nicht gestoppt werden muss und somit unabhängig von dieser Störung fortlaufen kann.

Die Puffereinheit kann vorteilhaft auch dazu dienen, dass darin die ersten in der Kontrolleinheit als gut befundenen Kunststoffvorformlinge wenigstens teilweise gespeichert werden, so dass ein flexibles Auffüllen von Lücken in einem Kunststoffvorformlingstrom ermöglicht wird. Diese Lücken im Vorformlingstrom entstehen dabei insbesondere durch die Aussonderung der als fehlerhaft detektierten Vorformlinge. Bevorzugt sollen durch die im Puffer angeordneten Vorformlinge demnach diese Lücken wieder geschlossen werden, in dem eine, durch einen fehlerhaften Vorformling entstandene Lücke, mit einem fehlerfreien Vorformling, welcher in der Puffereinheit abgelegt wurde, besetzt wird.

Im Stand der Technik war es bisher üblich diese durch insbesondere fehlerhafte Vorformlinge entstandenen Lücken nicht wieder zu schließen, so dass sich diese Lücken durch den kompletten weiteren Prozess und somit durch alle nachfolgenden Anlagen ziehen.

Es wird daher in einer vorteilhaften Ausführungsform vorgeschlagen, dass die ersten guten Kunststoffvorformlinge mit einem Transportshuttle, insbesondere einem Magnetshuttle von der Transportstrecke entnommen und der Puffereinheit zugeführt werden. Bevorzugt erfolgt dies solange, bis der Puffer komplett gefüllt ist. Vorteilhaft kann die Befüllung des Puffers aber auch nach und nach während der Produktion erfolgen. Bevorzugt ist der Puffer selbst auch steril ausgebildet und/oder weist vorteilhaft eine Sterilisationseinrichtung auf.

Vorteilhaft wird mit den Magnetshuttles nicht nur der Puffer aufgefüllt, sondern die Schließung der Lücken erfolgt ebenfalls mit den Magnetshuttles. Wurde demnach durch die Aussonderung eines fehlerhaften Kunststoffvorformlings eine Lücke erzeugt, so startet ein Magnetshuttle und speist zielgerichtet einen Vorformling aus dem Puffer an der entsprechenden Stelle in den Vorformlingstrom ein. Vorteilhaft wird dabei der komplette Bereich der Anlage inklusive des Puffers temperiert, so dass die Vorformlinge immer auf der richtigen Temperatur für den Blasformprozess bleiben. Dadurch wird der Prozess bzw. werden die Prozesse der Kunststoffvorformlingherstellung und der Kunststoffbehälterherstellung erheblich optimiert, perfektioniert und verbessert.

In einer weiteren vorteilhaften Ausführungsform ist es auch denkbar, dass die Kunststoffvorformlinge bereits direkt nach deren Herstellung, noch innerhalb der Spritzgussmaschine auf Fehler inspiziert werden und direkt nach der Entnahme aus der Spritzgussmaschine mittels des Greifers auf die Aussonderungseinheit überführt werden.

In einer weiteren bevorzugten Ausführungsform weist die Anlage eine Steuerungseinheit auf, welche, bei einer Störung in der Blasformmaschine, die Anlage in Abhängigkeit von einer Dauer, insbesondere einer zeitlichen Dauer, dieser Störung steuert. Handelt es sich demnach um eine Störung, welche von vergleichsweise kurzer zeitlicher Dauer ist, werden die Kunststoffvorformlinge vor dem Einlauf in die Blasformmaschine auf dem Transportsystem gepuffert. Ist die Störung von mittlerer zeitlicher Dauer, werden die bereits von der Spritzgussmaschine entnommenen Kunststoffvorformlinge vernichtet, insbesondere in der Aussonderungseinheit geschreddert. Bei einer zeitlich langen Störung dagegen, wird die Produktion in der Spritzgussmaschine komplett unterbrochen.

Dabei wäre es auch möglich, dass die hier beschriebenen Maßnahmen hintereinander ergriffen werden.

Eine zeitlich kurze Störung ist dabei insbesondere eine Störung von 1-10 Minuten, bevorzugt eine Störung von 1-5 Minuten. Eine mittlere Störung dauert insbesondere 5-30 Minuten, bevorzugt 5-20 Minuten. Unter einer langen Störung wird insbesondere eine Störung verstanden, welche für eine Dauer von mehr als 30 Minuten, bevorzugt von mehr als 20 Minuten, anhält. Das Ziel, dass die Steuerungseinheit entsprechend der Dauer der Störung reagiert, ist dabei, dass eine möglichst geringe Anzahl von bereits hergestellten Kunststoffvorformlingen vernichtet bzw. ausgesondert wird und die Produktion in den der Blasformmaschine vorgeschalteten Anlagenteilen möglichst lange ungehindert fortgeführt werden kann.

Bei einer weiteren vorteilhaften Ausführungsform ist anschließend an die Blasformmaschine ein Füller und/oder ein Verschließer und/oder eine Verpackungsmaschine angeordnet. Insbesondere erfolgt der Transport der Kunststoffbehältnisse von der Blasformmaschine zu dem Füller und/oder dem Verschließer und/oder der Verpackungsmaschine jeweils über wenigstens einen weiteren sterilen Luftförderer oder über wenigstens ein weiteres Transportshuttle, so dass bevorzugt ein kompletter Herstellprozess, angefangen bei der Herstellung der Kunststoffvorformlinge, bis hin zu der Verpackung der befüllten und verschlossenen Kunststoffbehältnisse, ohne Unterbrechung aufgrund von Lagerung und/oder Transport, an insbesondere einer Prozesslinie erfolgt.

Die vorliegende Erfindung ist weiterhin auf ein Verfahren zum Behandeln von Kunststoffvorformlingen gerichtet, umfassend eine Spritzgussmaschine, in welcher die Kunststoffvorformlinge hergestellt werden, eine sterile Blasformmaschine, in welcher die Kunststoffvorformlinge in Kunststoffbehältnisse umgeformt werden und ein Transportsystem, welches die hergestellten Kunststoffvorformlinge von der Spritzgussmaschine zu der Blasformmaschine transportiert. Die Kunststoffvorformlinge werden dabei während des Transports, insbesondere an einem Mündungsbereich der Kunststoffvorformlinge geführt.

Erfindungsgemäß ist das Transportsystem ein steriler Luftförderer, welcher von einem sterilen gasförmigen Medium durchflossen wird oder eine Vielzahl von Transportshuttles, insbesondere Magnetshuttles, wobei jedes Shuttle, jeweils wenigstens einen Kunststoffvorformling aufnimmt, um ihn von der Spritzgussmaschine zu der Blasformmaschine zu transportieren und wobei die Kunststoffvorformlinge während des Transports innerhalb eines Reinraums des Transportsystems transportiert werden. Bei dem sterilen gasförmigen Medium des Luftförderers handelt es sich vorteilhaft um Wasserstoffperoxid (H₂O₂) oder um Peressigsäure. Möglich sind aber auch alle anderen gasförmigen und flüssigen Medien, welche zur Sterilhaltung bzw. zur Sterilisation geeignet sind.

Vorteilhaft wird durch dieses gasförmige Medium auch der oben beschriebene Reinraum ausgebildet, insbesondere befindet sich das gasförmige Medium innerhalb des Reinraums. Bevorzug wird der Reinraum demnach durch das gasförmige Medium aufrechterhalten bzw. steril gehalten.

In einem vorteilhaften Verfahren wird in einer Entnahmestation der Spritzgussmaschine eine Vielzahl von Kunststoffvorformlingen in einem Spritzgusswerkzeug angeordnet und diese werden vor dem Einlauf in die Blasformmaschine vereinzelt auf einen Einzelstrang der Transportstrecke des Transportsystems geführt. Insbesondere ist die Vielzahl der Kunststoffvorformlinge matrixförmig in der Entnahmestation der Spritzgussmaschine angeordnet.

Bei einem weiteren vorteilhaften Verfahren führt ein schaltbarer Greifer und/oder eine schaltbare Weiche die Kunststoffvorformlinge vor dem Einlauf in die Blasformmaschine auf den Einzelstrang der Transportstrecke des Transportsystems.

Bei einem vorteilhaften Verfahren erfolgt die Übergabe der Kunststoffvorformlinge aus der matrixförmigen Anordnung des Spritzgusswerkzeugs in die linienförmige Transportstrecke des Transportsystems nach folgenden Konzept: Ein schaltbarer Greifer/Handlingkopf, beispielsweise ein Roboterarm, welcher stromaufwärts der Entnahmestation des Spritzgusswerkzeugs angeordnet ist, bringt die matrixförmig angeordneten Kunststoffvorformlinge in eine Linie. Die linear angeordneten Kunststoffvorformlinge können anschließend direkt in die Transportstrecke, insbesondere dem Einzelstrang der Transportstrecke des Luftförderers oder auf ein Transportshuttle übergeben werden. Vorteilhaft werden die Kunststoffvorformlinge von dem schaltbaren Greifer zentrisch gehalten, so dass der Umstellaufwand bei einem Sortenwechsel gering und reproduzierbar ist.

Bei einem weiteren vorteilhaften Verfahren erfolgt die Übergabe der Kunststoffvorformlinge aus der matrixförmigen Anordnung des Spritzgusswerkzeugs in die linienförmige Transportstrecke des Transportsystems, indem die Kunststoffvorformlinge matrixförmig aus dem Spritzgusswerkzeug entnommen werden und anschließend matrixförmig, insbesondere auf wenigstens drei Stränge der Transportstrecke abgelegt werden. Über die Transportstrecke des Transportsystems werden die wenigstens drei Stränge dann auf einen Einzelstrang gebündelt und gelangen einzeln in die Blasformmaschine.

Vorteilhaft ist hier auch wieder ein schaltbarer Greifer zwischen der Spritzgussmaschine und den wenigstens drei Strängen der Transportstrecke angeordnet, so dass dieser schaltbare Greifer die Kunststoffvorformlinge matrixförmig aus der Entnahmestation der Spritzgussmaschine entnimmt und wiederum in einer matrixförmigen Anordnung an das Transportsystem übergibt.

In einem weiteren vorteilhaften Verfahren erfolgt die Übergabe der Kunststoffvorformlinge aus der matrixförmigen Anordnung des Spritzgusswerkzeugs in die linienförmige Transportstrecke des Transportsystems, indem die Kunststoffvorformlinge wieder matrixförmig aus dem Spritzgusswerkzeug entnommen und matrixförmig auf die wenigstens drei Stränge der Transportstrecke abgelegt werden. Über eine schaltbare Weiche werden die wenigstens drei Stränge dann auf einen Einzelstrang zusammengeführt, so dass die Kunststoffvorformlinge einzeln der Blasformmaschine zugeführt werden. Insbesondere ist die Weiche derart schaltbar, dass der Einzelstrang der Transportstrecke, abwechselnd mit jeweils einem der vorgeschalteten Stränge der Transportstrecke verbunden wird.

Dabei ist hier vorteilhaft auch wieder ein schaltbarer Greifer zwischen der Spritzgussmaschine und den wenigstens drei Strängen der Transportstrecke des Transportsystems angeordnet, so dass in dieser Ausführungsform die Kunststoffvorformlinge über einen schaltbaren Greifer und über eine schaltbare Weiche von der Spritzgussmaschine zu der Blasformmaschine transportiert werden können.

Die Erfindung ist weiterhin auf einen Luftförderer, beispielsweise einen Gasförderer, zum Transportieren von Kunststoffvorformlingen von einer Spritzgussmaschine zu einer Blasformmaschine gerichtet, wobei innerhalb des Luftförderers ein Gasstrom ausgebildet wird und der Luftförderer mindestens zwei Führungsschienen, welche die Kunststoffvorformlinge zumindest während des Transports zu der Blasformmaschine führen, und einen Reinraum umfasst.

Erfindungsgemäß ist der Gasstrom innerhalb des Luftförderers, wenigstens in einem Bereich in dem die Kunststoffvorformlinge transportiert werden, mit einem sterilen gasförmigen Medium versetzt. Vorteilhaft ist dieser Gasstrom, ein die Kunststoffvorformlinge antreibender Luftstrom, welcher mit Wasserstoffperoxid (H₂O₂) oder Peressigsäure versetzt ist und/oder steril filtriert wird. Vorteilhafter Weise wird der gesamte Bereich des Luftförderers mit einem sterilen gasförmigen Medium, insbesondere gasförmigen Wasserstoffperoxid (H₂O₂) oder gasförmiger Peressigsäure versetzt.

Bevorzugt weist wenigstens der Bereich, in welchen die Kunststoffvorformlinge transportiert werden, ein höheres Druckniveau auf, als eine unsterile Umgebung. Dieses höhere Druckniveau liegt insbesondere mehr als 2 Pascal, bevorzugt mindestens 3 Pascal über dem Umgebungsdruck. Insbesondere unterliegt aber der gesamte Bereich des Luftförderers einem Druckniveau, welches höher als der Umgebungsdruck ist.

Bei einer bevorzugten Ausführungsform des Luftförderers werden die Kunststoffvorformlinge innerhalb der Transportstrecke des Luftförderers an ihrem Trag- bzw. Verschlussring geführt, in dem der innerhalb des Luftförderers ausgebildete Gasstrom bevorzugt derart gesteuert wird, so dass er an einem Mündungsbereich der Kunststoffvorformlinge angreift.

Weiterhin ist die Erfindung auch auf eine Transportshuttleeinrichtung zum Transportieren von Kunststoffvorformlingen von einer Spritzgussmaschine zu einer Blasformmaschine gerichtet, mit einer Transportstrecke, auf welcher die Transportshuttles gleitend gelagert sind und wenigstens einer Aufnahme für die Kunststoffvorformlinge, wobei jedes Transportshuttle wenigstens einen Kunststoffvorformling aufnimmt.

Erfindungsgemäß ist das Transportshuttle als ein Magnetshuttle ausgebildet. Vorteilhaft ist eine Vielzahl von derartigen Magnetshuttles in der Anlage angeordnet, welche bevorzugt unabhängig voneinander angetrieben bzw. durch die Anlage bewegt werden können. Bevorzugt ist der Antrieb für die Magnetshuttles in Langstator-Bauweise ausgeführt, denkbar ist aber auch eine Kurzstator-Bauweise. Bevorzugt weist dabei jedes Magnetshuttles einen eigenen Antrieb auf, welcher unabhängig von den anderen, d.h. den Antrieben anderer Shuttles steuerbar ist.

In einer vorteilhaften Ausführungsform der Transportshuttles ist die Aufnahme für die Kunststoffvorformlinge derart ausgestaltet, dass die Kunststoffvorformlinge drehend an der Aufnahme angeordnet sind und sich demzufolge während des Transports drehen. Dazu ist bevorzugt ein Transportdorn an der Aufnahme angeordnet, welcher in eine Mündung des Kunststoffvorformlings eingreift. Bei einer weiteren vorteilhaften Ausführungsform des Transportshuttles ist an der Aufnahme für die Kunststoffvorformlinge bevorzugt ein Greifer angeordnet, welcher drehbar ist, und die Kunststoffvorformlinge an ihren Mündungen greift.

Bevorzugt ist der Kunststoffvorformling bereits nach der Herstellung, vorteilhaft bereits während der Herstellung in der Spritzgussmaschine, auf einen Transportshuttle angeordnet, so dass der Kunststoffvorformling den gesamten Transportweg durch die komplette Anlage, bis hin zur Blasformmaschine, auf diesen Transportshuttle angeordnet ist. In diesem Fall ist es nicht mehr notwendig den Kunststoffvorformling während des Transports durch die Anlage umzusetzen, insbesondere auf eine andere Transporteinrichtung umzusetzen.

Weitere Vorteile und Ausführungsformen ergeben sich aus den beigefügten Zeichnungen:
Darin zeigen:
- Fig. 1: eine schematische Darstellung einer erfindungsgemäßen Anlage zum Behandeln von Kunststoffvorformlingen;
- Fig. 2: eine schematische Darstellung einer ersten erfindungsgemäßen Ausführungsform, einer Anlage zum Behandeln von Kunststoffvorformlingen;
- Fig. 3: eine schematische Darstellung einer zweiten erfindungsgemäßen Ausführungsform, einer Anlage zum Behandeln von Kunststoffvorformlingen;
- Fig. 4: eine schematische Darstellung einer weiteren erfindungsgemäßen Ausführungsform, einer Anlage zum Behandeln von Kunststoffvorformlingen;
- Fig. 5: eine Darstellung einer weiteren erfindungsgemäßen Anlage; und
- Fig. 6: eine Spritzgussform zur Herstellung von Kunststoffvorformlingen.

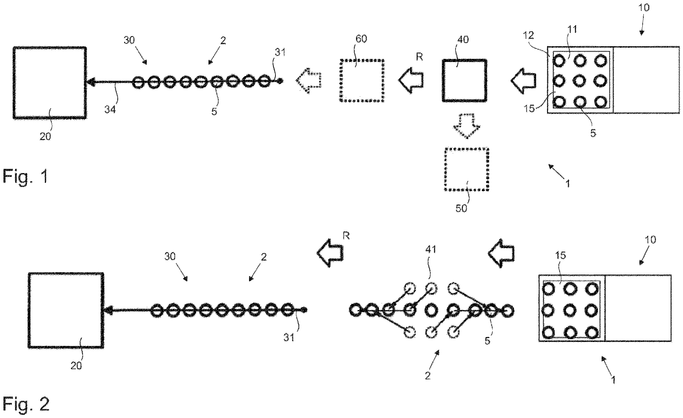

Die Fig. 1 zeigt eine schematische Darstellung einer erfindungsgemäßen Ausführungsform, einer Anlage 1 zum Behandeln von Kunststoffvorformlingen 5. Erkennbar ist hier eine Entnahmestation 12 einer Spritzgussmaschine 10 zum Herstellen der Kunststoffvorformlinge 5. Eine Vielzahl von Kunststoffvorformlingen 5 ist in der Entnahmestation 12, insbesondere matrixförmig in einem Spritzgusswerkzeug 11 angeordnet. Eine Handhabungseinrichtung 40 entnimmt die fertigen Kunststoffvorformlinge 5 aus dieser matrixförmigen Anordnung 15 und führt sie in einem Einzelstrang 31 einer Transportstrecke 34 eines Luftförderers 30 zu, welcher die Kunststoffvorformlinge anschließend einzeln zu einer Blasformmaschine 20 transportiert, in welcher die Kunststoffvorformlinge zu (nicht gezeigten) Kunststoffbehältnissen umgeformt werden. Vorteilhaft weist die Anlage 1 weiterhin eine Aussonderungseinheit 50 und/oder eine Puffereinheit 60 zwischen der Spritzgussmaschine 10 und der Blasformmaschine 20 auf. Bevorzugt ist zwischen der Spritzgussmaschine und der Blasformmaschine auch eine (nicht gezeigte) Sterilisationseinrichtung zum Sterilisieren der Kunststoffvorformlinge, vorgesehen. Insbesondere könnten mit dieser Sterilisationseinrichtung zusätzlich auch Teile bzw. Bestandteile der Handhabungseinrichtung sterilisiert werden.

Das Bezugszeichen 2 kennzeichnet einen Reinraum/Sterilraum, welcher das Transportsystem bzw. die Transportstrecke umgibt, so dass eine Förderung der Vorformlinge unter sterilen Bedingungen erfolgen kann. Bevorzugt umgibt der Reinraum dabei den Luftförderer oder die Transportshuttles. Vorteilhaft ist es auch denkbar, dass der Reinraum ebenfalls mit dem gasförmigen Medium des Luftförderers versetzt wird, wodurch die sterilen Bedingungen innerhalb des Reinraums geschaffen werden.

Die Aussonderungseinheit 50 dient dabei insbesondere dazu, um fehlerhaft hergestellte Kunststoffvorformlinge auszusondern. Zu diesem Zweck kann die Aussonderungseinheit 50 auch einen Vorformlingshredderer aufweisen, welcher die ausgesonderten und fehlerhaften Vorformlinge gleich vernichtet. Weiterhin kann eine (nicht gezeigte) Kontrolleinheit, zum Inspizieren der Vorformlinge, zwischen der Spritzgussmaschine 10 und der Aussonderungseinheit 50 vorhanden sein. Vorteilhaft wird das Material dieser vernichteten Kunststoffvorformlinge anschließend einer (nicht gezeigten) Kunststoff-Recycling-Anlage zugeführt. In der Puffereinheit 60 können die sich bereits in der Handhabungseinrichtung 40 befindlichen Kunststoffvorformlinge zwischengelagert werden, wenn eine Störung in der nachfolgenden Blasformmaschine auftritt. Auch ist es denkbar, dass immer eine bestimmte Anzahl an Kunststoffvorformlingen in der Puffereinheit 60 gelagert wird, so dass bei einer Störung der Spritzgussmaschine 10 die Umformung der Kunststoffvorformlinge 5 zu den Kunststoffbehältnissen in der Blasformmaschine 20 weitergeführt werden kann. Vorzugsweise werden die Kunststoffvorformlinge mit der Handhabungseinrichtung 40 der entsprechenden Einheit zugeführt. Das Bezugszeichen R kennzeichnet die Transportrichtung der Kunststoffvorformlinge von der Spritzgussmaschine zu der Blasformmaschine. Die Weitergabe der Kunststoffvorformlinge aus der Spritzgussmaschine in die Förderstrecke 34 und somit die Eingabe in die Blasformmaschine erfolgt nach dem FiFo Prinzip.

Fig. 2 zeigt eine Darstellung einer ersten erfindungsgemäßen Ausführungsform, einer Anlage 1 zum Behandeln von Kunststoffvorformlingen 5. Erkennbar sind hier wieder die Spritzgussmaschine 10, zum Herstellen der Kunststoffvorformlinge 5, die Blasformmaschine 20, zum Umformen der Kunststoffvorformlinge 5 in Kunststoffbehältnisse sowie das Transportsystem 30, welches zwischen der Spritzgussmaschine 10 und der Blasformmaschine 20 angeordnet ist. Das Bezugszeichen 41 kennzeichnet einen schaltbaren Greifer, beispielsweise Handlingeinrichtung, welcher die Kunststoffvorformlinge aus der matrixförmigen Anordnung 15 des Spritzgusswerkzeugs 10 entnimmt und die Vorformlinge entlang einer Linie anordnet. Die Kunststoffvorformlinge 5 werden anschließend zu dem Einzelstrang 31 der Transportstrecke 34 des Transportsystems 30 transportiert und vereinzelt in die Blasformmaschine 20 geführt.

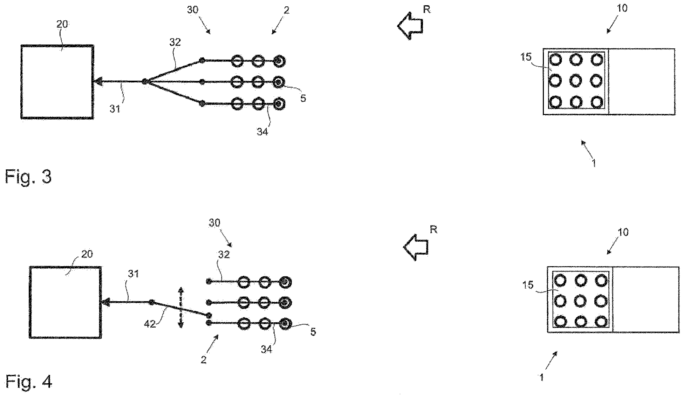

In Fig. 3 wird eine zweite erfindungsgemäße Ausführungsform einer Anlage 1 zum Behandeln von Kunststoffvorformlingen 5 gezeigt. In dieser Ausführungsform umfasst die Transportstrecke 34 des Transportsystems 30 wenigstens drei Stränge 32, welche vor dem Einlauf in die Blasformmaschine zu einem Einzelstrang 31 zusammenlaufen. Die Kunststoffvorformlinge werden aus der matrixförmigen Anordnung 15 aus der Entnahmestation 12 entnommen und matrixförmig an wenigstens drei Stränge 32 der Transportstrecke 34 übergeben, wobei die wenigstens drei Stränge 32 zu einem Einzelstrang 31 zusammenlaufen, so dass die Kunststoffvorformlinge 5 wieder einzeln der Blasformmaschine zugeführt werden. Die Entnahme der Kunststoffvorformlinge 5 aus der matrixförmigen Anordnung 15 kann dabei wieder mittels dem schaltbaren Greifer erfolgen.

Fig. 4 zeigt eine weitere Darstellung einer erfindungsgemäßen Ausführungsform, einer Anlage 1 zum Behandeln von Kunststoffvorformlingen 5. Hier weist die Transportstrecke 34 des Transportsystems 30 ebenfalls wieder wenigstens drei Stränge 32 auf, welche vor dem Einlauf in die Blasformmaschine 20 zu einem Einzelstrang 31 zusammenlaufen. Die Kunststoffvorformlinge werden demnach wieder matrixförmig an die wenigstens drei Stränge 32 der Transportstrecke 34 übergeben. Eine schaltbare Weiche 42, welche insbesondere abwechselnd mit jeweils einem Sträng 32 der Transportstrecke 34 verbunden wird, führt die Kunststoffvorformlinge vereinzelt zu dem Einzelstrang 31 und somit einzeln zu der Blasformmaschine 20. Dabei ist es hier auch wieder denkbar, dass zur Entnahme der Kunststoffvorformlinge 5 aus der matrixförmigen Anordnung 15, vorteilhaft wieder der schaltbare Greifer zwischen der Spritzgussmaschine 10 und den Strängen 32 der Transportstrecke angeordnet ist.

Aus den Fig.1-4 ist weiterhin erkennbar, dass die matrixförmige Anordnung 15 an der Entnahmestation 12 der Spritzgussmaschine 10 derart gestaltet ist, dass wenigstens neun Kunststoffvorformlinge aufgenommen werden können. Denkbar ist aber auch das die matrixförmige Anordnung an verschiedene Gegebenheiten angepasst werden kann, so dass auch, wenn notwendig oder gewünscht, mehr oder weniger Kunststoffvorformlinge als dargestellt aufgenommen werden können.

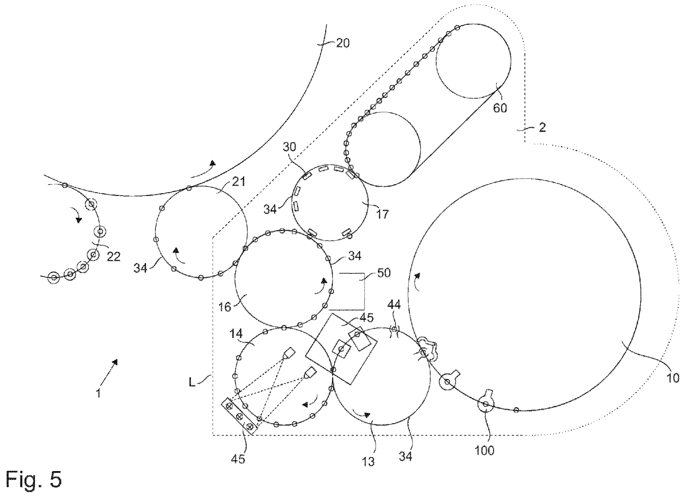

Fig. 5 zeigt eine Darstellung einer weiteren erfindungsgemäßen Ausführungsform. In dieser Ausführungsform ist die Transportstrecke durch mehrere Transportsterne bzw. Transporträder ausgebildet. Durch die gestrichelte Linie L wird hier ein Bereich gekennzeichnet, welcher einen temperierten Bereich ausbildet, so dass die Kunststoffvorformlinge nach dem Spritzgussprozess auf der für den Blasformprozess erforderlichen Temperatur gehalten werden. Mit dem Bezugszeichen 2 wird hier wiederum der Reinraum/Sterilraum bezeichnet, welcher einen sterilen Transport der Vorformlinge ermöglicht.

In der Spritzgussmaschine 10 werden die Kunststoffvorformlinge hergestellt und nach der Herstellung mit einer Greifeinrichtung 44, welche an einem Entnahmerad 13 angeordnet ist aus der Spritzgussmaschine 10 entnommen. Vorteilhaft ist dabei eine Vielzahl derartiger Greifeinrichtungen 44 an dem Entnahmerad 13 angeordnet. Dabei kann vorteilhaft bereits an dem Entnahmerad 13 eine Kontrolleinheit 45 angeordnet sein, in welcher bereits eine Inspektion der Mündung und des Bodens des Kunststoffvorformlings stattfindet, während der Vorformling noch in der Greifeinrichtung 44 angeordnet ist. Bevorzugt kann dabei bereits hier eine Ausleitung, der als fehlerhaft identifizierten Kunststoffvorformlinge erfolgen.

Die Greifeinrichtungen 44 übergeben die Kunststoffvorformlinge anschließend an einen (nicht dargestellten) Transportdorn, ein sogenanntes Dornhandling, welcher an einem Kontrollrad 14 angeordnet ist. In diesem Kontrollrad 14 befindet sich wieder eine Kontrolleinheit 45, wobei hier eine Inspektion der Seitenwand und der Farbe des Kunststoffvorformlings stattfindet. Vorteilhaft wird die Kontrolleinheit 45 daher durch das Entnahmerad 13 und das Kontrollrad 14 ausgebildet.

Dem Kontrollrad 14 ist ein Aussonderungsrad 16 nachgeschaltet, welches die in der Kontrolleinheit 45 als fehlerhaft erkannten Vorformlinge in eine Aussonderungseinheit 50 aussondert. Dagegen werden die ersten als gut erkannten Kunststoffvorformlinge an ein Übergaberad 17 übergeben. In diesem Übergaberad 17 werden die Kunststoffvorformlinge mit Transportshuttles 30 und insbesondere Magnetshuttles, zu einer Puffereinheit 60 transportiert, in welcher die Vorformlinge gelagert bzw. zwischengespeichert werden. Der Transport der fehlerfreien Vorformlinge in die Puffereinheit 60 erfolgt dabei solange, bis der Puffer vollständig aufgefüllt ist.

Die in der Puffereinheit 60 abgelegten Kunststoffvorformlinge dienen dabei insbesondere dazu, um im laufenden Verfahren entstehende Lücken, welche insbesondere durch das Aussondern der fehlerhaften Vorformlinge in die Aussonderungseinheit 50 entstanden sind, wieder aufzufüllen. Dazu entnimmt das Transportshuttle 30 einen Vorformling aus der Puffereinheit 60 und übergibt ihn an die entsprechende Lücke in dem Vorformlingstrom des Aussonderungsrads 16.

Denkbar ist dabei auch, dass statt eines Transportshuttles ein steriler Luftförderer in dem Übergaberad 17 vorhanden ist. Bevorzugt erfolgt in dieser Ausführungsform der Transport der Kunststoffvorformlinge mit einem Transportshuttle 30 oder einem sterilen Luftförderer, nur von dem Aussonderungsrad 16 zu der Puffereinheit 60 bzw. von der Puffereinheit 60 zu der Lücke in dem Vorformlingstrom des Aussonderungsrades 16, wohingegen der weitere Transport mit Greifeinrichtungen und Transportdornen erfolgt.

Denkbar ist hier allerdings auch, das die gesamte Transportstrecke als Luftförderer ausgebildet ist oder, dass der Kunststoffvorformling bereits während der Herstellung in der Spritzgussmaschine 10 auf einem Transportshuttle angeordnet und auf diesem bis zu der Blasformmaschine 20 befördert wird.

Von dem Aussonderungsrad 16 aus gelangen die fehlerfreien Vorformlinge an ein Übergaberad 21, welches die Kunststoffvorformlinge an die Blasformmaschine 20 übergibt. Mit einer Ausschleusung 22, werden die fertigen, in der Blasformmaschine hergestellten Kunststoffbehältnisse ausgeschleust und vorteilhaft an eine weitere (nicht dargestellte) Behandlungsanlage, beispielsweise einen Füller, einen Verschließer und/oder einer Verpackungsanlage übergeben.

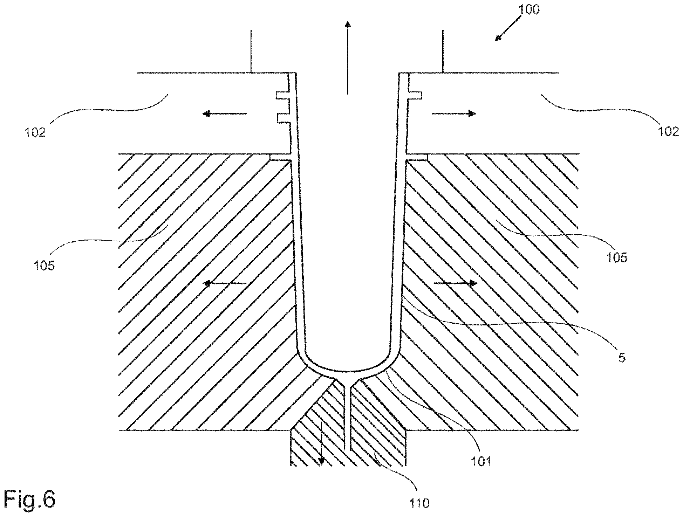

In Fig. 6 ist eine Spritzgussform 100, zur Herstellung von Kunststoffvorformlingen 5 dargestellt. Erkennbar ist hier ein Bodenbereich mit Anspritzung 101 an dem gerade die Anspritzdüse 110 herangeführt ist, welche flüssiges Kunststoffgranulat in die Spritzgussform 100 einbringt. Weiterhin sind die jeweils zwei Klammern für die Mündungen 102 und für die Seitenwände 105 dargestellt. Durch diese Klammern 102, 105 wird die Spritzgussform 100 fest geschlossen und nach der Herstellung des Kunststoffvorformlings 5 auch wieder geöffnet.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

### Bezugszeichenliste

- 1: Anlage
- 2: Reinraum, Sterilraum
- 5: Kunststoffvorformlinge
- 10: Spritzgussmaschine
- 11: Spritzgusswerkzeug
- 12: Entnahmestation
- 13: Entnahmerad
- 14: Kontrollrad
- 15: matrixförmige Anordnung
- 16: Aussonderungsrad
- 17: Übergaberad
- 20: Blasformmaschine
- 21: Übergaberad
- 22: Ausschleusung
- 30: Transportsystem, Luftförderer, Transportshuttle
- 31: Einzelstrang
- 32: Stränge
- 34: Transportstrecke
- 40: Handhabungseinrichtung
- 41: schaltbarer Greifer
- 42: schaltbare Weiche
- 44: Greifeinrichtung
- 45: Kontrolleinheit
- 50: Aussonderungseinheit
- 60: Puffereinheit
- 100: Spritzgussform
- 101: Bodenbereich mit Anspritzung
- 102: Klammer für Mündung
- 105: Klammer für Seitenwand
- 110: Anspritzdüse
- L: temperierter Bereich
- R: Transportrichtung

## Patentansprüche

1. Anlage (1) zum Behandeln von Kunststoffvorformlingen (5), umfassend eine Spritzgussmaschine (10) zum Herstellen der Kunststoffvorformlinge, eine sterile Blasformmaschine (20), zum Umformen der Kunststoffvorformlinge (5) in Kunststoffbehältnisse und ein Transportsystem (30) zum wenigstens abschnittsweisen und/oder teilweisen Transportieren der hergestellten Kunststoffvorformlinge (5) von der Spritzgussmaschine (10) zu der Blasformmaschine (20), wobei die Kunststoffvorformlinge während des Transports, insbesondere an einem Mündungsbereich der Kunststoffvorformlinge (5), führbar sind,
**dadurch gekennzeichnet, dass**
das Transportsystem (30) einen sterilen Luftförderer (30) oder eine Vielzahl von Transportshuttles (30), insbesondere Magnetshuttles umfasst und die Kunststoffvorformlinge von dem sterilen Luftförderer oder den Magnetshuttles von der Spritzgussmaschine zu der Blasformmaschine transportiert werden.

2. Anlage (1) nach Anspruch 1,
**dadurch gekennzeichnet, dass**
an einer Entnahmestation (12) der Spritzgussmaschine (10) eine Vielzahl von Kunststoffvorformlingen (5) in einem Spritzgusswerkzeug (11) angeordnet ist, welche mittels einer Handhabungseinrichtung (40) vereinzelt an einen Einzelstrang (31) einer Transportstrecke (34) des Transportsystems (30) übergeben werden, so dass die Kunststoffvorformlinge (5) einzeln an die Blasformmaschine (20) transportierbar sind.

3. Anlage (1) nach Anspruch 2,
**dadurch gekennzeichnet, dass**
die Handhabungseinrichtung (40) einen schaltbaren Greifer (41) und/oder eine schaltbare Weiche (42) umfasst.

4. Anlage (1) nach Anspruch 1,
**dadurch gekennzeichnet, dass**
zwischen der Spritzgussmaschine (10) und der Blasformmaschine (20) eine Aussonderungseinheit (50) zum Aussondern von fehlerhaften Kunststoffvorformlingen (5), und/oder eine Puffereinheit (60) zum Zwischenlagern der Kunststoffvorformlinge (5), und/oder eine Kontrolleinheit (45) zum Inspizieren der Kunststoffvorformlinge (5) angeordnet ist.

5. Anlage (1) nach Anspruch 4,
**dadurch gekennzeichnet, dass**
die Puffereinheit (60) dazu dient, die ersten in der Kontrolleinheit (45) als gut befundenen Kunststoffvorformlinge (5) wenigstens teilweise zu speichern, so dass ein flexibles Auffüllen von Lücken in einem Kunststoffvorformlingstrom ermöglicht wird.

6. Anlage (1) nach Anspruch 4 oder 5,
**dadurch gekennzeichnet, dass**
die ersten guten Kunststoffvorformlinge (5) mit einem Magnetshuttle von der Transportstrecke (34) entnommen werden und der Puffereinheit (60) zugeführt werden.

7. Anlage (1) nach Anspruch 1,
**dadurch gekennzeichnet, dass**
die Anlage (1) eine Steuerungseinheit umfasst, welche, bei einer Störung in der Blasformmaschine (20), die Anlage (1) in Abhängigkeit von einer Dauer dieser Störung steuert.

8. Verfahren zum Behandeln von Kunststoffvorformlingen (5), umfassend eine Spritzgussmaschine (10), in welcher die Kunststoffvorformlinge (5) hergestellt werden, eine sterile Blasformmaschine (20), in welcher die Kunststoffvorformlinge (5) in Kunststoffbehältnisse umgeformt werden und ein Transportsystem (30), welches die hergestellten Kunststoffvorformlinge (5) von der Spritzgussmaschine (10) zu der Blasformmaschine (20) transportiert, wobei die Kunststoffvorformlinge während des Transports, insbesondere an einem Mündungsbereich der Kunststoffvorformlinge (5), geführt werden,
**dadurch gekennzeichnet, dass**
das Transportsystem (30) ein steriler Luftförderer (30) ist, welcher von einem sterilen gasförmigen Medium durchflossen wird oder eine Vielzahl von Transportshuttles, insbesondere Magnetshuttles, wobei jedes Shuttle jeweils wenigstens einen Kunststoffvorformling aufnimmt, um ihn von der Spritzgussmaschine (10) zu der Blasformmaschine (20) zu transportieren und wobei die Kunststoffvorformlinge während des Transports innerhalb eines Reinraums (2) des Transportsystems transportiert werden.

9. Verfahren nach Anspruch 8,
**dadurch gekennzeichnet, dass**
in einer Entnahmestation (12) der Spritzgussmaschine (10) eine Vielzahl von Kunststoffvorformlingen (5) in einem Spritzgusswerkzeug (11) angeordnet wird und vor dem Einlauf in die Blasformmaschine (20) vereinzelt auf einen Einzelstrang (31) der Transportstrecke (34) des Transportsystems (30) geführt wird.

10. Verfahren nach Anspruch 9,
**dadurch gekennzeichnet, dass**
ein schaltbarer Greifer (41) und/oder eine schaltbare Weiche (42) die Kunststoffvorformlinge (5) vor dem Einlauf in die Blasformmaschine (20) auf den Einzelstrang (31) der Transportstrecke (34) des Transportsystems (30) führt.

11. Luftförderer (30) zum Transportieren von Kunststoffvorformlingen von einer Spritzgussmaschine (10) zu einer Blasformmaschine (20), wobei innerhalb des Luftförderers (30) ein Gasstrom ausgebildet wird und der Luftförderer (30) mindestens zwei Führungsschienen, welche die Kunststoffvorformlinge zumindest während des Transports zu der Blasformmaschine (20) führen, und einen Reinraum (2) umfasst,
**dadurch gekennzeichnet, dass**
der Gasstrom innerhalb des Luftförderers (30), wenigstens in einem Bereich in dem die Kunststoffvorformlinge (5) transportiert werden, mit einem sterilen gasförmigen Medium versetzt ist.

12. Luftförderer (30) nach Anspruch 11,
**dadurch gekennzeichnet, dass**
wenigstens der Bereich, in welchen die Kunststoffvorformlinge (5) transportiert werden, ein höheres Druckniveau aufweist, als eine unsterile Umgebung.

13. Transportshuttleeinrichtung (30) zum Transportieren von Kunststoffvorformlingen von einer Spritzgussmaschine (10) zu einer Blasformmaschine (20), mit einer Transportstrecke (34), auf welcher die Transportshuttles (30) gleitend gelagert sind und wenigstens einer Aufnahme für die Kunststoffvorformlinge, wobei jedes Transportshuttle wenigstens einen Kunststoffvorformling aufnimmt,
**dadurch gekennzeichnet, dass**
das Transportshuttle (30) als Magnetshuttle ausgebildet ist.

14. Transportshuttle (30) nach Anspruch 13,
**dadurch gekennzeichnet, dass**
eine Vielzahl von Magnetshuttles in der Anlage angeordnet ist, welche unabhängig voneinander angetrieben bzw. durch die Anlage bewegt werden können.

15. Transportshuttle (30) nach Anspruch 13 oder 14,
**dadurch gekennzeichnet, dass**
der Kunststoffvorformling bereits während der Herstellung in der Spritzgussmaschine (10) auf dem Transportshuttle angeordnet ist.
